# EUROPÄISCHE PATENTSCHRIFT

(11) **EP 0 590 227 B1**
(45) Veröffentlichungstag und Bekanntmachung des Hinweises auf die Patenterteilung: **03.04.1996**
(21) Anmeldenummer: 93101971.5
(22) Anmeldetag: 09.02.1993
(51) Int. Cl.: H02H 7/085, E05F 15/20

(54) **Blockiererkennung für Gleichstrommotoren**
Stalling detection for direct current motors
Détection de blocage pour moteurs à courant continu

(30) Priorität: 10.02.1992 DE 4203659
(43) Veröffentlichungstag der Anmeldung: 06.04.1994
(73) Patentinhaber: Bayerische Motoren Werke Aktiengesellschaft, D-80788 München (DE)
(72) Erfinder: Wagner, Armin, W-8031 Gernlinden (DE)
(74) Vertreter: Bullwein, Fritz

(56) Entgegenhaltungen:
- DE-A- 3 634 731
- DE-A- 3 832 941
- PATENT ABSTRACTS OF JAPAN, unexamined applications, E Field, Band 8, Nr. 161, 26. Juli 1984 THE PATENT OFFICE JAPANESE GOVERNMENT Seite 12 E 257

## Beschreibung

Die Erfindung bezieht sich auf eine Schaltanordnung nach dem Oberbegriff des Patentanspruchs 1. Eine solche Sohaltanordnung ist aus der DE-A-3634731 bekannt.

Es existieren verschiedene Möglichkeiten, das Einklemmen eines Gegenstands während der Bewegung des Ausrüstungsbauteils bzw. das Einlaufen des Ausrüstungsbauteils in die Endlage festzustellen und den Antriebsmotor abzuschalten sowie ggf. ergänzend in seiner Bewegungsrichtung umzukehren. Es ist beispielsweise bekannt, mit Hilfe eines elektrischen Kontaktstreifens in der Endlage des Ausrüstungsbauteils beide Fälle zu erkennen und entsprechend darauf zu reagieren. Alternativ dazu ist es auch möglich, in der Endlage eine Gummidichtung mit einem Luftvolumen anzuordnen, das ggf. verringert wird und bei der durch die Erhöhung des Luftdrucks die kritische Lage des Ausrüstungsbauteils erkennbar ist. Ferner ist es bekannt, mit Hilfe eines Endlagenschalters, der bei Erreichen der Endlage durch das Ausrüstungsbauteil betätigbar ist, diese Stellung des Ausrüstungsbauteils zu erkennen.

Aus der DE-OS 29 26 938 ist eine Schaltanordnung der eingangs genannten Art bekannt, bei der mit einem vorgegebenen konstanten Referenzstromwert gearbeitet wird. Eine derartige Schaltanordnung ist jedoch bei Kraftfahrzeugen nur sehr bedingt tauglich, da aufgrund der Fertigungstoleranzen des Antriebsmotors sowie des Ausrüstungsbauteils und der dafür vorgesehenen mechanischen Führungselemente der tatsächlich richtige Referenzstromwert starken Schwankungen unterworfen ist. Hinzu kommt die Temperaturabhängigkeit für die aus Antriebsmotor, Ausrüstungsbauteil sowie zugeordneten mechanischen Konstruktionselementen bestehende Baueinheit, die den maßgeblichen Referenzstromwert unvorhersehbar ändert.

Der Erfindung liegt die Aufgabe zugrunde, mit schaltungstechnisch einfachen Mitteln eine Schaltanordnung der eingangs genannten Art zu schaffen, die den Referenzstromwert der jeweiligen Temperatur und den konstruktiven und fertigungstechnischen Verhältnissen anpaßt.

Die Erfindung löst diese Aufgabe durch die kennzeichnenden Merkmale des Patentanspruchs 1.

Die bei Einschalten des Antriebsmotors auftretende Stromspitze ist ein sehr genaues Maß für den individuellen und auch durch die jeweiligen Verhältnisse bedingten Referenzstromwert. Zur Realisierung der Erfindung ist es lediglich erforderlich, diese Stromspitze zu bestimmen und der Vergleichseinrichtung zuzuführen. Die Stromspitze kann in bekannter Weise mit Hilfe einer Sample-and-Hold-Schaltung bestimmt werden. Mit Vorteil wird diese Stromspitze bei jeder Inbetriebnahme des Antriebsmotors bestimmt werden. Insbesondere bei mehrmaligem, rasch aufeinander folgenden Einschalten genügt aber auch eine einmalige Bestimmung.

Weitere Verbesserungen der Erfindung sind Gegenstand der Patentansprüche 2 und 3. Sie bestehen für den Patentanspruch 2 darin, die Endlage sicher zu erreichen. Mit Hilfe der Verzögerungszeit von beispielsweise 5 msec wird nach dem Erreichen der Stromspitze der Antriebsmotor mit einer Stromstärke betrieben, die das Ausrüstungsbauteil sicher in die Endlage bringt. Dabei ist es auch möglich, aufgrund der Betriebszeit des Antriebsmotor grob zu unterscheiden, ob das Ausrüstungsbauteil seine Endlage erreicht hat, oder ob ein Gegenstand in die Bewegungsbahn des Ausrüstungsbauteils geraten ist. Im Gegensatz zum ersten Fall wird dann im zweiten Fall der Antriebsmotor sofort bei Erreichen der Stromspitze abgeschaltet.

Der Patentanspruch 3 gibt an, wie Änderungen der Bordnetzspannung, die während der Bewegung des Ausrüstungsbauteils auftreten können, berücksichtigt werden. Grundsätzlich hat eine Erhöhung der Bordnetzspannung eine entsprechende Erhöhung der Stromspitze zur Folge. Damit wird der relevante Referenzstromwert noch besser an die jeweiligen Verhältnisse angepaßt.

In der Zeichnung ist anhand eines Ausführungsbeispiels die Erfindung weiter erläutert. Es zeigt
- Figur 1: den prinzipiellen Aufbau einer erfindungsgemäßen Schaltanordnung,
- Figur 2: ein Diagramm für den auftretenden Betriebsstrom des in Figur 1 dargestellten Antriebsmotors und
- Figur 3: ein Diagramm zur Berücksichtigung der Bordnetzspannung und der Temperatur während der Betriebszeit der Schaltanordnung von Figur 1.

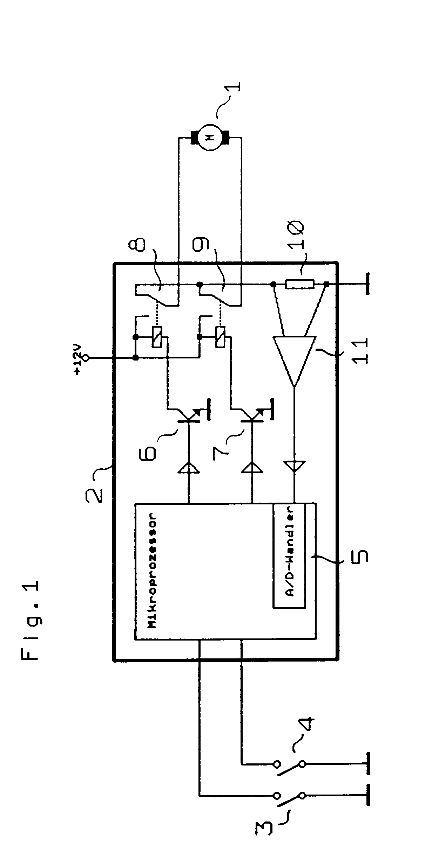

In Figur 1 ist schematisch eine Schaltanordnung für die Beschaltung eines Antriebsmotors 1 eines elektrischen Fensterhebers von Kraftfahrzeugen dargestellt. Der Antriebsmotor 1 besitzt zwei Drehrichtungen, mit denen ein nichtdargestelltes Ausrüstungsbauteil, beispielsweise eine Fensterscheibe oder ein Schiebedach, in zwei zueinander entgegengesetzten Bewegungsrichtungen verfahrbar ist. Der Antriebsmotor 1 ist durch eine Steuereinheit 2 ansteuerbar, die wiederum durch zwei Tastschalter 3 und 4 ansteuerbar ist. In der Steuereinheit 2 befindet sich ein Mikroprozessor 5 sowie zwei über Endstufen 6 und 7 schaltbare Wechslerrelais 8 und 9, deren zugehörige Wechslerkontakte 8' und 9' im Stromkreis des Antriebsmotors 1 liegen. Mit Hilfe der Wechslerkontakte 8' und 9' ist der Antriebsmotor 1 auf seinen beiden Anschlußseiten wahlweise mit der Bordnetzspannung bzw. -masse verbindbar. Ebenfalls innerhalb des Stromkreises für den Antriebsmotor 1 befindet sich ein Meßwiderstand 10, der über einen Verstärker 11 auf den Analog/Digital-Wandlereingang des Mikroprozessors 5 geschaltet ist.

Mit Hilfe des Antriebsmotors 1 ist eine elektromotorische Bewegung des Fensterhebers in beiden Richtungen möglich. Hierzu wird der Schalter 3 bzw. 4 kurzzeitig betätigt und an die Steuereinheit 2 ein Schaltbefehl aufgegeben. Die Steuereinheit 2 schaltet über die Wechselkontakte 8' und 9' den Antriebsmotor 1 ständig an die Bordnetzspannung an. Das Ausrüstungsbauteil wird dadurch selbsttätig in seine Endlage verfahren. Insbesondere dann, wenn es sich dabei um die Lage handelt, in der das Ausrüstungsbauteil eine Öffnung (Fenster- bzw. Dachöffnung) verschließt, kann es während der Bewegung des Ausrüstungsbauteils zu einem Einklemmen eines Gegenstands kommen. Auch ist die Zeit, innerhalb der nach dem Aufgeben eines Schaltbefehls ein vorgegebener Weg durch das Ausrüstungsbauteil zurückgelegt wird, stark von Fertigungstoleranzen des Antriebsmotor 1, des Ausrüstungsbauteils selbst bzw. von ebenfalls nicht dargestellten mechanischen Führungselementen abhängig. Weitere wesentliche Einflußfaktoren sind die Bordnetzspannung durch die Außentemperatur. Andererseits soll die gewünschte Endlage sicher erreicht werden bzw. bei Einklemmen eines Gegenstands sofort der Antriebsmotor 1 abgeschaltet bzw. sogar in seiner Drehrichtung reversiert werden.

Dies wird erreicht mit Hilfe des Meßwiderstands 10, der den durch den Antriebsmotor 1 fließenden elektrischen Strom über den Verstärker 11 und den im Mikroprozessor 5 vorhandenen Analog-Digital-Wandler bestimmt. Überschreitet der Strom einen vorgegebenen Referenzstromwert, so wird der Antriebsmotor 1 bei Auftreten eines Hindernisses schlagartig bzw. bei Erreichen der Endlage mit einer geringen zeitlichen Verzögerung stillgesetzt bzw. sogar reversiert. Der Referenzstromwert seinerseits wird durch den bei Einschalten des Antriebsmotors 1 auftretenden Spitzenstromwert vorgegeben. Dieser Wert wird mit Hilfe einer im Mikroprozessor 5 vorgesehenen sample-and-hold-Schaltung gemessen und als Referenz für die jeweilige Bewegung des Antriebsmotors 1 abgespeichert. Erreicht der Strom durch den Meßwiderstand 10 und damit durch den Antriebsmotor 1 den Referenzstromwert, so ist der Zeitpunkt für das ggf. verzögerte Unterbrechen der Bewegung des Ausrüstungsbauteils gekommen.

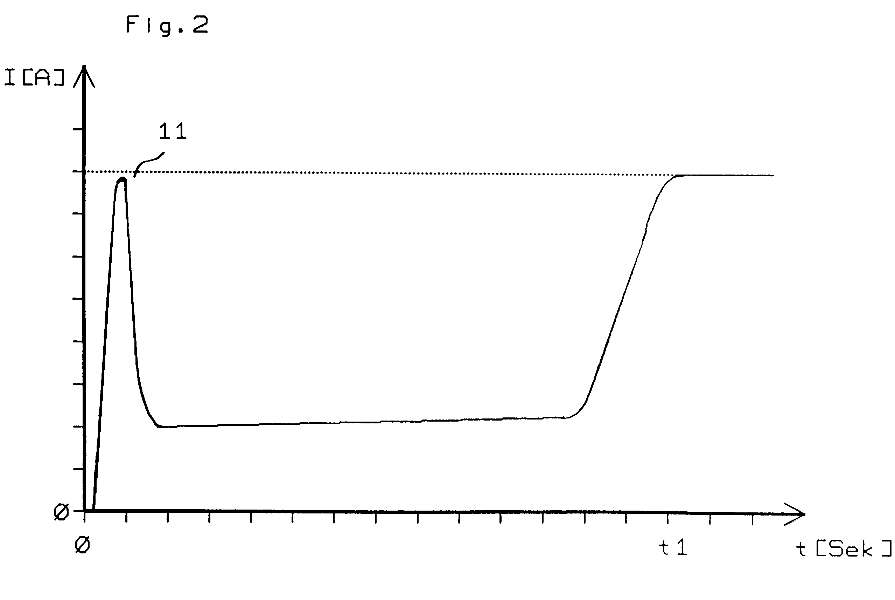

Dies ist anhand des in Figur 2 dargestellten Diagramms erläutert. Das Diagramm zeigt den Verlauf des elektrischen Stromes durch den Antriebsmotor 1 vom Zeitpunkt seines Einschaltens bis zum Abschalten auf. Das Einschalten erfolgt zur Zeit t=0 und ist durch eine Stromspitze 11 unmittelbar nach dem Einschaltzeitpunkt erkennbar. Diese Stromspitze wird mit Hilfe des Analog-Digital-Wandlers im Mikroprozessor 5 gemessen und im Mikroprozessor gespeichert. Der Strom durch den Antriebsmotor 1 besitzt während der angenommen gleichmäßigen Bewegung des Ausrüstungsbauteils den dargestellten Verlauf und ist durch einen geringfügigen Anstieg gekennzeichnet. In der Nähe der Endlage zeigt sich ein relativ starker Anstieg des elektrischen Stromes, der zum Zeitpunkt t1 einen Wert erreicht, der gleich dem der Stromspitze 11 ist. Kurze Zeit nach t1 wird der Antriebsmotor 1 ausgeschaltet. Dabei ist angenommen, daß es sich um eine Bewegung des Ausrüstungsbauteils handelt, bei der dieses in seiner Endlage verfahren wird. Die Unterscheidung zwischen dem ebenfalls möglichen Einklemmen eines Gegenstandes durch das Ausrüstungsbauteil wird hier aufgrund der relativ langen Betriebszeit vorgenommen, die für den Antriebsmotor 1 - hier von t=0 bis t1 - vorliegt. Bei einer demgegenüber wesentlich kürzeren Betriebszeit wäre das Einklemmen des Gegenstands nicht auszuschließen und der Antriebsmotor 1 bei Erreichen der Stromspitze 11 sofort stillgesetzt worden.

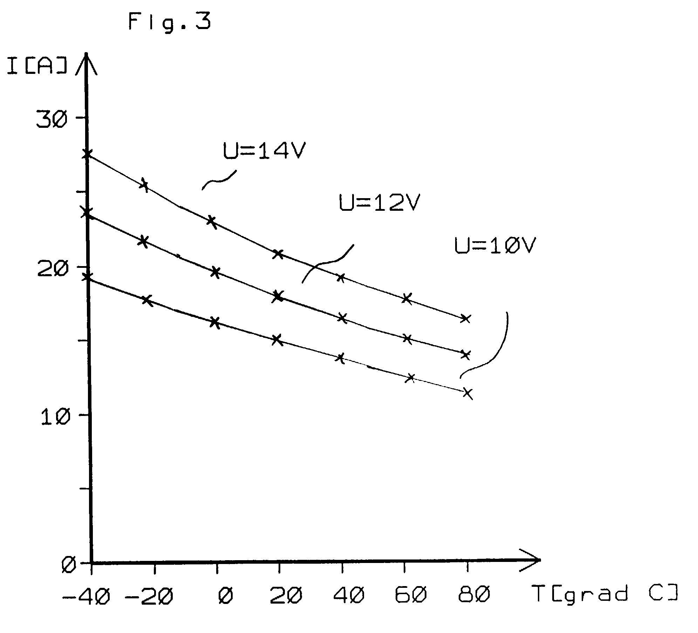

Der Wert der Stromspitze 11 ist, wie bereits ausgeführt, von Fertigungstoleranzen der an der Bewegung des Ausrüstungsbauteils beteiligten Elemente einerseits und andererseits von der Außentemperatur und der jeweiligen Bordnetzspannung abhängig. Gerade letztere Einflußfaktoren sind von besonderer Bedeutung. Dies ist anhand von Figur 3 dargestellt. In Figur 3 ist die Abhängigkeit des Spitzenwertes (11 in Figur 2) für unterschiedliche Betriebstemperaturen und unterschiedliche Bordnetzspannungen dargestellt. Die Betriebstemperatur reicht dabei von - 40°C bis + 80°C, die Betriebsspannung U ist für 10V, 12V und 14V aufgetragen. Deutlich ist zu erkennen, daß die Stromspitze bei hoher Betriebstemperatur und hoher Bordnetzspannung niedriger als bei niedriger Außentemperatur und niedriger Bordnetzspannung ist. Dabei sind Fertigungstoleranzen nicht berücksichtigt, die für verschiedene Baumuster einen nichtvorhersehbaren Einfluß auf die Steigung und die Lage der in Figur 3 dargestellten Kurvenschar besitzen.

Durch die aktuelle Speicherung des Spitzenwertes 11 für jeden Einschaltvorgang des Antriebsmotors wird die Wahl des maßgeblichen Stromwertes für das Abschalten des Antriebsmotors an den jeweiligen Betriebsfall und die jeweiligen Einflüsse von Fertigungstoleranzen angepaßt. Ebenso ist es möglich, bei einer Änderung der Bordnetzspannung während des Betriebs des Ausrüstungsbauteils den zunächst gemessenen Spitzenwert 11 entsprechend der Bordnetzspannung bzw. -änderung zu korrigieren und bei einem Ansteigen der Bordnetzspannung während der Bewegung des Ausrüstungsbauteils auch den Spitzenwert um einen entsprechenden Wert zu vergrößern.

Die bisherige Beschreibung ist auf den Anwendungsfall eines elektrischen Fensterhebers bzw. Schiebedachs gerichtet. Ebenso ist es möglich, mit der erfindungsgemäßen Schaltanordnung u. a. einen Antriebsmotor für einen selbsttätigen Türschließer, eine elektrisch betriebene Radioantenne oder ein elektrisches Sonnenschutzrollo zu betreiben.

## Patentansprüche

1. Schaltanordnung für den Antrieb eines elektromotorisch in Richtung einer Endlage verstellbares Ausrüstungsbauteil von Kraftfahrzeugen, mit einem Antriebsmotor (1) und einem in dessen Stromzuführung liegenden Meßwiderstand (10) sowie mit einer Vergleichseinrichtung (5), die bei Überschreiten eines vorgegebenen Referenzstromwertes den Antriebsmotor stillsetzt, dadurch gekennzeichnet, daß die bei Einschalten des Antriebsmotors auftretende Stromspitze (11) als Referenzstromwert dient.

2. Schaltanordnung nach Anspruch 1, dadurch gekennzeichnet, daß der Antriebsmotor (1) eine kurze Verzögerungszeit nach Überschreiten des Referenzstromwertes abschaltbar ist.

3. Schaltanordnung nach Anspruch 1 oder 2, dadurch gekennzeichnet, daß der Referenzstromwert bei einer Änderung des Bordnetzspannungswertes während der Bewegung des Ausrüstungsbauteils entsprechend dieser Änderung korrigiert ist.

## Claims

1. A circuit arrangement for the drive of an electromotively adjustable component of a motor vehicle in the direction of an end position, with a drive motor (1) and a measuring resistor (10) in the path of its current feed, together with a comparator (5) which stops the drive motor (1) if a predetermined reference current value is exceeded, characterised in that the current peak (11) reached when the drive motor is switched on serves as the reference current value.

2. A circuit arrangement according to claim 1, characterised in that the drive motor (1) can be switched off after a short delay period if the current value exceeds the reference current value.

3. A circuit arrangement according to claim 1 or 2, characterised in that in the event of a change in the voltage value of the electrical system during movement of the component, the reference current value is corrected correspondingly to this change.

## Revendications

1. Circuit pour la mise en oeuvre d'une pièce d'équipement de véhicule automobile, entraînée par un moteur électrique dans la direction de sa position de fin de course, comprenant un moteur (1) et une résistance de mesure (10) montée dans le circuit d'alimentation du moteur, ainsi qu'un comparateur (5) qui, lors du dépassement d'une valeur de référence donnée de l'intensité, arrête le moteur, caractérisé en ce que la pointe de courant (11) qui se produit lors de la mise en marche du moteur, constitue l'intensité de courant de référence.

2. Circuit selon la revendication 1, caractérisé en ce que le moteur (1) peut être coupé après un court temps de temporisation suivant le dépassement de l'intensité de courant de référence.

3. Circuit selon la revendication 1 ou 2, caractérisé en ce que l'intensité de courant de référence est corrigée, en cas de variation de la tension du réseau embarqué pendant le déplacement de la pièce d'équipement, en fonction de cette variation.
